# EUROPÄISCHE PATENTANMELDUNG

(11) **EP 1 988 262 A1**
(43) Veröffentlichungstag der Anmeldung: **05.11.2008**
(21) Anmeldenummer: 06024325.0
(22) Anmeldetag: 23.11.2006
(51) Int. Cl.: F01D 25/26, F16B 29/00

(54) **Thermoelastischer Teilfugenverbinder**

(71) Anmelder: SIEMENS AKTIENGESELLSCHAFT, 80333 München (DE)
(72) Erfinder: Geist, Richard, 91207 Lauf (DE)

(57) **Zusammenfassung**

Die Erfindung betrifft einen thermoelastischen Teilfugenverbinder (2, 38, 50) zum Verbinden eines ersten mit einem zweiten Gehäuseelement (8, 12) einer Turbomaschine, umfassend ein Spannelement (4, 40, 52) zum Verbinden der Gehäuseelemente (8, 12) und zum Übertragen einer Vorspannkraft zum Anpressen der Gehäuseelemente (8, 12) gegeneinander.

Um eine Teilfuge einer Turbomaschine auch bei einer großen thermischen Dehnung und anschließenden Entspannung zuverlässig dicht halten zu können, wird vorgeschlagen, dass der Teilfugenverbinder (2, 38, 50) eine Vorspannfeder (22) zum federnden Aufbringen der Vorspannkraft aufweist.

## Beschreibung

Die Erfindung betrifft einen thermoelastischen Teilfugenverbinder zum Verbinden eines ersten mit einem zweiten Gehäuseelement einer Turbomaschine, umfassend ein Spannelement zum Verbinden der Gehäuseelemente und zum Übertragen einer Vorspannkraft zum Anpressen der Gehäuseelemente gegeneinander.

Bei Turbomaschinen, wie Gas- oder Dampfturbinen, ist es praktisch unmöglich, die Wärmeausdehnung sehr heiß werdender Gehäuseelemente, wie beispielsweise Leitschaufelträger, in allen Betriebszuständen gleichmäßig zu halten. Es treten daher an Teilfugen zwischen Gehäuseelementen große thermische Spannungen auf, die sehr hohe Anforderungen an Teilfugenverbindungen stellen.

Aus der EP 1 162 347 A1 sind eine Vielzahl von möglichen Teilfugenverbindungen bekannt, die das Problem des zuverlässigen Haltens der hohen Spannungen mit dem Ziel von kleinbauenden Teilfugenverbindern zu lösen versuchen. Hierbei kommen unter Anderem Schweißverbindungen, Verschraubungen an Flanschen, Verbindungen mit Hilfe von Keilklemmen, Klauen und Klammerelementen oder Schrumpfringe zum Einsatz.

Um Teilfugenverbindungen auch nach langer Betriebszeit bis zu einer nächsten Wartung dicht zu halten, ist es außerdem bekannt, die Teilfugenverbinder mit einer Vorspannung zu beaufschlagen, so dass die Teilfugenverbinder auch bei einer thermischen Längung und anschließenden Schrumpfung während des Betriebs die Teilfugen sicher zusammenhalten und eine Dichtigkeit der Turbomaschine sicherstellen.

Zum Aufbringen der Vorspannung ist es des Weiteren bekannt, die Teilfugenverbinder torsionsfrei zu dehnen und im gedehnten Zustand an die Gehäuseelemente anzulegen. Um große Verbindungselemente, wie sie zum Halten von Teilfugen an Turbomaschinen notwendig sind, gezielt vorzuspannen, werden diese durch Erhitzung gelängt, im erhitzten Zustand an die Gehäuseelemente angelegt und dort abgekühlt, so dass sie sich verkürzen und unter Vorspannung an den Gehäuseelementen anliegen. Da dieses Verfahren zeitaufwendig ist und die Vorspanngenauigkeit schwer einstellbar ist, werden Teilfugenverbinder zunehmend mit hydraulischen Geräten gedehnt und unter Vorspannung an die Gehäuseelemente gesetzt.

Teilfugenverbinder sind während des Betriebs teilweise sehr hohen Temperaturen ausgesetzt. Bei Dampftemperaturen von über 500°C erreichen die zusammengehaltenen Gehäuseelemente eine Temperatur von 500°C und mehr, so dass an einem Flansch der Gehäuseelemente angeordnete Teilfugenverbinder im Inneren des Flanschs Temperaturen von bis zu 480°C erreichen. Um eine Teilfuge unter allen Betriebsbedingungen dicht zu halten, werden Teilfugenverbinder daher thermisch elastisch gestaltet. Hierzu werden die Verbindungselemente, die die Gehäuseelemente zusammenhalten, beispielsweise als Spannbolzen mit einem Dehnschaft ausgeführt, und beispielsweise als sogenannte Dehnschrauben ausgeführt. Zusätzlich ist es bekannt, Dehnhülsen zu verwenden, die im Kraftfluss der Vorspannkraft um die Spannbolzen angeordnet sind, um die Verbindung bei instationären Temperaturdehnungen elastischer zu machen.

Dennoch sind diese Verbindungen sehr empfindlich gegen thermische Dehnungen während des Betriebs der Turbomaschine. So kann es beispielsweise durch zu schnelles Anfahren der Turbomaschine, bei dem sehr hohe thermische Spannungen auftreten können, vorkommen, dass ein Teilfugenverbinder überdehnt wird und die Vorspannung nach einer anschließenden Entspannung des Teilfugenverbinders nicht mehr ausreicht, um eine Dichtigkeit der Teilfuge zu gewährleisten.

Es ist daher die Aufgabe der vorliegenden Erfindung, einen Teilfugenverbinder anzugeben, mit dem eine Teilfuge einer Turbomaschine auch bei einer großen thermischen Dehnung zuverlässig dicht gehalten werden kann.

Diese Aufgabe wird gelöst durch einen thermoelastischen Teilfugenverbinder der Eingangs genannten Art, der erfindungsgemäß eine Vorspannfeder zum federnden Aufbringen der Vorspannkraft aufweist. Es kann eine hohe Elastizität des Teilfugenverbinders erreicht werden, die auch bei einer großen Dehnung des Teilfugenverbinders aufrechterhalten bleiben kann.

Die Erfindung geht hierbei von der Überlegung aus, dass der Relaxationswiderstand bzw. die Restspannung des Spannelementwerkstoffs möglichst groß sein sollte, damit die verbleibende Restklemmkraft des Spannelements nicht vor Ablauf des angesetzten Revisionsintervalls auf einen zu niedrigen Wert absinkt. Das ist - besonders bei hohen Temperaturen - nur durch Einsatz sehr hochwertiger Werkstoffe zu erreichen. Außerdem muss die Teilfugenverbindung elastisch genug sein, um die komplexen Wechselwirkungen zwischen einem Flansch der Gehäuseelemente und dem Spannelement durch unterschiedliches Wärmeausdehnungsverhalten und Setzeffekte in beispielsweise einem Gewinde und Auflagen unbeschadet überstehen zu können. Um eine notwendige thermische Elastizität zusätzlich zu einem zuverlässigen Aufbringen der Haltekräfte zu erreichen, muss das Spannelement in seiner Auslegung mit einem hohen Sicherheitszuschlag versehen werden, da zum Zeitpunkt der Auslegung nicht alle im Betrieb auftretenden Dehnungsfälle vorhergesagt werden können.

Durch die Verwendung einer Vorspannfeder kann eine große Dehnfähigkeit des Teilfugenverbinders erreicht werden, ohne dass damit eine hohe Belastung des Spannelements verbunden ist. Durch eine im Vergleich zum Spannelement flache Federkennlinie der Vorspannfeder kann eine Belastung des Spannelements von einer Dehnung zumindest teilweise entkoppelt werden. Bei und nach einer Dehnung verbleibt stets eine hohe Vorspannkraft erhalten, die ein Abdichten der Teilfuge gewährleistet. Auch bei einem Entspannen des Teilfugenverbinders bleibt zumindest der überwiegende Teil der Vorspannung erhalten, so dass die Teilfuge auch dann zuverlässig dicht bleibt.

Außerdem ist eine Berechnung des Spannelements durch die bekannte Federkennlinie der Vorspannfeder wesentlich einfacher, als wenn das Spannelement die Dehnung aufbringen müsste, da dann sehr kompliziert zu ermittelnde Einflüsse auf die Kräfte berücksichtigt werden müssen. Zusätzlich kann ein sehr hochwertiger Werkstoff auf die Vorspannfeder beschränkt bleiben, wodurch ein preiswerter Teilfugenverbinder erreichbar ist.

Der Teilfugenverbinder kann zum Verbinden von Gehäuseelementen der Turbomaschine eingesetzt werden, die einen Hochdruckraum im Inneren der Turbomaschine umschließen. Ebenso denkbar ist, dass der Teilfugenverbinder einen Flansch einer Rohrverbindung verbindet, beispielsweise einer Dampfzuleitung zu einer Turbomaschine, wobei die Gehäuseelemente in diesem Fall Rohrwandungen mit beispielsweise je einem Flanschelement sind, die mit dem Teilfugenverbinder miteinander verbunden werden.

Ist das Spannelement ein Spannbolzen, so kann der Teilfugenverbinder kompakt und einfach konstruiert sein. Die Vorspannfeder ist zweckmäßigerweise von einem die Gehäuseelemente zusammen haltenden Spannelement, wie beispielsweise dem Spannbolzen, getrennt ausgeführt und insbesondere verbindefunktionsfrei, dient somit nicht an sich zum Verbinden der Gehäuseelemente. Der Spannbolzen ist vorteilhafterweise durch die Gehäuseelemente hindurchgeführt, beispielsweise durch einen Flansch der Gehäuseelemente. Er kann ein eigenständiger Bolzen oder ein Bolzenfortsatz eines Verbindungselements sein.

Die Vorspannfeder ist zweckmäßigerweise im Kraftfluss zwischen zumindest einem der Gehäuseelemente und dem Spannelement angeordnet. Von der Vorspannfeder federnd aufgebrachte Vorspannkraft durchläuft die Vorspannfeder, die hierdurch mit der Vorspannkraft federnd zusammengedrückt wird, also das Spannelement ohne vollständig zusammengepresst zu sein federnd spannt. Sie dient vorzugsweise zum federnden Erzeugen der gesamten Vorspannkraft. Durch den Teilfugenverbinder können zwei oder mehr Gehäuseelemente miteinander verbunden werden.

Gehäuseelemente einer Turbomaschine sind sehr hohen Drücken ausgesetzt und müssen beispielsweise einen Dampfdruck von 100 bar gegen einen geringen Außendruck halten. Dementsprechend hoch ist die Vorspannkraft zu halten, um die Teilfuge auch bei großen Druckunterschieden zuverlässig dicht zu halten. Eine hohe Vorspannung kann besonders einfach von einem Teilfugenverbinder auf die Gehäuseelemente aufgebracht werden, wenn die Vorspannfeder ein Tellerfederelement ist, das zweckmäßigerweise eine, insbesondere mehrere Tellerfedern umfasst.

Durch die hohe Vorspannkraft ist das Spannelement an der Stelle einer Krafteinleitung durch die Vorspannfeder einer hohen Belastung ausgesetzt. Diese Belastung kann verringert werden, wenn die Einleitung der Vorspannkraft in das Spannelement über einen größeren axialen Bereich verteilt wird. Dies kann erreicht werden, wenn die Vorspannfeder an mehreren in Axialrichtung des Spannelements verteilten Stellen eines Kraftaufnahmemittels angreift. Das Kraftaufnahmemittel kann das Spannelement selbst sein bzw. ein Teil von ihm, oder ein anderes, zur Aufnahme der Vorspannkraft aus der Vorspannfeder vorgesehenes Mittel, wie z.B. eine Mutter oder eine Hülse.

Eine hohe Vorspannkraft und eine Verteilung der Einleitung der Vorspannkraft in das Spannelement bzw. das Kraftaufnahmemittel kann einfach erreicht werden, wenn die Vorspannfeder eine Spiraltellerfeder ist. Sie ist zweckmäßigerweise um das Spannelement herumgeführt und greift in dieses und eine Hülse oder alternativ in zwei Hülsen ein.

Eine einfache und direkte Verbindung der Vorspannfeder mit dem Spannelement kann erreicht werden, wenn die Vorspannfeder in ein Gewinde des Spannelements, insbesondere des Spannbolzens, eingreift. Das Spannelement kann einfach in die Vorspannfeder eingeschraubt und so mit ihr verbunden werden.

Eine einfach herzustellende und kompakte Kraftübertragung kann erreicht werden, wenn der Teilfugenverbinder eine die Vorspannung haltende Gewindeverbindung mit einem Außengewinde eines Innenelements und einem Innengewinde einer Mutter umfasst, wobei die Vorspannfeder zur Übertragung eines Kraftflusses vom Außengewinde zum Innengewinde in beide Gewinde eingreift. Das Innenelement kann der Spannbolzen oder beispielsweise eine mit dem Spannbolzen verbundene Innenhülse sein.

Eine Verschraubung des Spannelements mit einer Mutter oder einer Gewindehülse, die mittelbar oder unmittelbar an einem Gehäuseelement anliegt, stellt eine einfache kraftschlüssige Verbindung des Spannelements mit einem Gehäuseelement dar. Greift die Vorspannfeder in die Mutter oder die Gewindehülse zum Halten der Vorspannkraft ein, so kann die Vorspannfeder einfach und kompakt in diese kraftschlüssige Verbindung integriert werden. Die Mutter oder Gewindehülse dient vorteilhafterweise zum Aufbringen einer Verschraubungskraft von außen auf den Spannbolzen.

Bei einem Vorspannen des Spannelements bzw. des Spannbolzens sollte vermieden werden, dass die Vorspannfeder mit einer bedeutenden Torsionskraft belastet wird. Um dies zu vermeiden, kann ein Innenelement und darüber einen Außenmutter des Teilfugenverbinders auf den Spannbolzen geschraubt werden,sodass die Vorspannfeder verdrehfrei zwischen den Teilen gehalten werden kann.

In diese Anordnung kann die Vorspannfeder einfach und kompakt integriert werden, wenn die Vorspannfeder im Kraftfluss zwischen der Außenmutter und dem mit der Außenmutter verschraubten Innenelement zum Übertragen der Vorspannkraft von der Außenmutter auf das Spannelement angeordnet ist. Diese Anordnung ist besonders vorteilhaft, wenn der Spannbolzen in ein Sackloch eines der Gehäuseelemente eingeschraubt und nur von einer Seite zugänglich ist. Die Außenmutter dient hierbei zum Halten der Vorspannkraft, sie ist also im Kraftfluss der Vorspannkraft angeordnet.

Bei einer durch einen Flansch reichenden Verschraubung kann ein Ende des Spannelements zum Vorspannen verwendet werden und am anderen Ende kann die Vorspannfeder angeordnet sein. Hierfür umfasst der Teilfugenverbinder vorteilhafterweise eine an einem Ende des Spannelements angeordnete erste Hülse und eine am anderen Ende des Spannelements angeordnete zweite Hülse, die beide im Kraftfluss der Vorspannkraft zwischen dem Spannelement und jeweils einem Gehäuseelement angeordnet sind, wobei die Vorspannfeder in der ersten Hülse beherbergt ist.

Hierbei ist die Vorspannfeder besonders gut von außen oder gegen ein Verrutschen geschützt, wenn die erste Hülse mit einem Sackloch zum Eingreifen des Spannelements versehen ist. Das Sackloch kann vollständig geschlossen oder mit einer Öffnung im Sacklochende versehen sein.

Eine einfache Spannvorrichtung zum Vorspannen des Spannelements kann erreicht werden, wenn das Spannelement hierzu nicht gezogen, sondern gegen die Kraft der Vorspannfeder gedrückt werden kann. Dies kann bei einer wie oben beschriebenen Durchverschraubung mit zwei Hülsen einfach erreicht werden, wenn die erste Hülse einen Anschluss für ein hydraulisches Spannmittel aufweist. Zum einfachen Aufbringen der Druckkraft auf das Spannelement weist die erste Hülse zweckmäßigerweise eine Druckkammer zum hydraulischen Pressen der Vorspannfeder auf.

Die Erfindung wird anhand von Ausführungsbeispielen näher erläutert, die in den Zeichnungen dargestellt sind.

Es zeigen:
FIG 1 einen thermoelastischen Teilfugenverbinder für eine Sacklochverbindung zweier Gehäuseelemente,
FIG 2 einen thermoelastischen Teilfugenverbinder für eine Durchverschraubung zweier Gehäuseelemente, die von einer hydraulischen Spannvorrichtung vorgespannt werden kann und
FIG 3 einen thermoelastischen Teilfugenverbinder mit einer Druckkammer zum hydraulischen Vorspannen einer Vorspannfeder bzw. eines Spannbolzens.

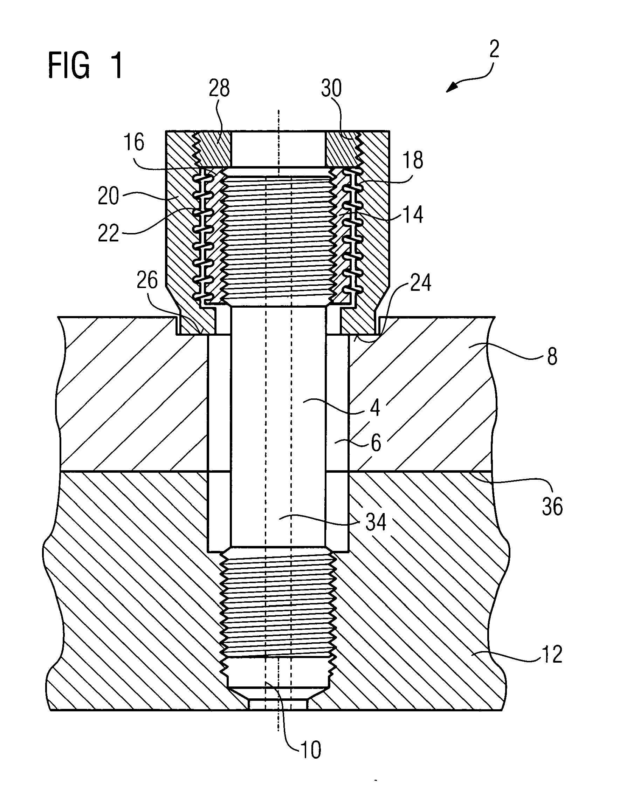

FIG 1 zeigt einen thermoelastischen Teilfugenverbinder 2 mit einem als Spannbolzen ausgeführten Spannelement 4, das durch eine als Durchgangsbohrung ausgeführten Öffnung 6 eines ersten Gehäuseelements 8 einer Turbomaschine geführt ist. Mit einem Ende ist das Spannelement 4 in einem Sackloch 10 eines zweiten Gehäuseelements 12 verschraubt. An seinem entgegengesetzten Ende ist das Spannelement 4 mit einem als Innenhülse ausgeführten Innenelement 14 verschraubt. Das Innenelement 14 ist mit einem Außengewinde 16 versehen, das mit einem Innengewinde 18 einer Mutter 20 korrespondiert, so dass das Innengewinde 18 mit dem Außengewinde 16 eine spiralförmige Hohlkammer zwischen dem Innenelement 14 und der Mutter 20 bildet. In dieser Hohlkammer ist eine Vorspannfeder 22 in Form einer Spiraltellerfeder angeordnet, die dementsprechend spiralförmig um das Innenelement 14 und das Spannelement 6 geführt ist.

Bei einem Montieren des Teilfugenverbinders 2 wird zunächst das Spannelement 4 in das Gehäuseelement 12 eingeschraubt. Dann wird ein Paket aus der Mutter 20, dem Innenelement 14 und der Vorspannfeder 22 und einem Deckel 28 auf das Spannelement 4 aufgeschraubt, bis eine Druckfläche 24 der Mutter 20 auf einer korrespondierenden Druckfläche 26 des Gehäuseelements 8 aufliegt.

Hierbei kann die Vorspannfeder 22 bereits vorgespannt sein, indem der Deckel 28 mit einem Außengewinde 30 in ein entsprechendes Innengewinde der Mutter 20 eingeschraubt und das Innenelement 14 relativ zur Mutter 20 nach unten gedrückt wird. Hierdurch wird die Vorspannfeder 22 gespannt, so dass das in sich verspannte Paket auf das Spannelement 4 aufgeschraubt werden kann, ohne dass die Vorspannkraft auf das Spannelement 4 oder die Gehäuseelemente 8, 12 übertragen wird.

Zur weiteren Erhöhung der Vorspannung wird das Spannelement 4 bzw. der Spannbolzen mit einer elektrischen Heizpatrone erwärmt, die in einen Heizkanal 34 des Spannelements 4 eingeführt wird. Hierdurch wird das Spannelement 4 etwas gelängt, so dass sich ein Spalt zwischen den Druckflächen 24, 26 bildet. Durch weiteres Aufschrauben des gesamten Pakets auf das Spannelement 4 wird dieser Spalt wieder geschlossen.

Anschließend wird der Deckel 28 aus dem Gewinde 30 ein Stück weit herausgeschraubt, so dass die Vorspannkraft nun nicht mehr im Paket in sich gehalten ist, sondern die Mutter 20 über die Druckflächen 24, 26 gegen das Gehäuseelement 8 drückt, die Vorspannfeder 22 das Spannelement 4 aus der Öffnung 6 herauszuziehen sucht und damit die Vorspannung auf das Spannelement 4 übertragen wird.

Bei Abkühlen des Spannelements 4 schrumpft dieses wieder und drückt die Vorspannfeder 22 noch weiter zusammen, dass die Vorspannung erhöht wird und die beiden Gehäuseelemente 8, 12 mit einer gewünschten Vorspannkraft gegeneinander gepresst werden. Eine Teilfuge 36 zwischen den beiden Gehäuseelemente 8, 12 ist nun dicht geschlossen. Diese Vorspannkraft durchläuft die Vorspannfeder 22, die hierdurch mit der Vorspannkraft federnd zusammengedrückt wird, also das Spannelement 4 ohne vollständig zusammengepresst zu sein federnd gegen die beiden Gehäuseelemente 8, 12 spannt.

Die von der Vorspannfeder 22 erzeugte Vorspannkraft wird durch die spiralförmige Anordnung der Vorspannfeder 22 um das Spannelement 4 bzw. das Innenelement 14 gleichmäßig zwischen dem Innenelement 14 und der Mutter 20 übertragen, so dass sich diese Kraft in Axialrichtung über einen weiten Bereich des Innenelements 14 und der Mutter 20 verteilt. Bei einer Betrachtung eines Schnitts in Axialrichtung, wie in FIG 1 dargestellt, wird die Vorspannkraft durch die acht Windungen der Vorspannfeder 22 an acht in Axialrichtung des Spannelements 4 verteilten Stellen übertragen. Durch die Spiralform der als Spiraltellerfeder gebildeten Vorspannfeder 22 überträgt diese auch in Umfangsrichtung gleichmäßig die Vorspannkraft, so dass das Innenelement 14 und die Mutter 20, die auch als Kraftaufnahmemittel bezeichnet werden können, einer relativ geringen mechanischen Belastung ausgesetzt sind.

Bei einer thermischen Belastung des Teilfugenverbinders 2, bei der beispielsweise die Strecke zwischen den Druckflächen 24, 26 und dem Sackloch 10 durch ein thermisches Arbeiten der Gehäuseelemente 8, 12 vergrößert wird, wird diese Längenänderung von der Mutter 20 auf die Vorspannfeder 22 übertragen, die hierdurch weiter zusammengepresst wird. Entsprechend ihrer Federkennlinie tritt hierbei zusätzlich zu der Vorspannkraft eine weitere Spannkraft auf, die jedoch erheblich geringer ist als eine Spannkraft, die durch eine entsprechende Längung des Spannelements 4 ohne die Vorspannfeder 22 auftreten würde.

Die Vorspannfeder 22 und der von dem Außengewinde 16 und dem Innengewinde 18 gebildete spiralförmige Kanal sind in ihren Abmessungen so ausgelegt, dass ein Federn der Vorspannfeder 22 auch bei größtmöglicher thermischer Belastung oder Entlastung der Gehäuseelemente 8, 12 erhalten bleibt, die Vorspannfeder 22 also weder vollständig zusammengedrückt wird noch vollständig entspannt.

Bei einer anschließenden thermischen Entlastung der Gehäuseelemente 8, 12 verkürzt sich die Strecke zwischen den Druckflächen 24, 26 und dem Sackloch 10, beispielsweise wieder auf ihre Ausgangslänge. Dieser Längenunterschied wird vollständig von der Vorspannfeder 22 aufgenommen, so dass keine plastische Verformung eines der Bauteile des Teilfugenverbinders 2 entsteht und die Vorspannfeder 22 bzw. das Vorspannelement 4 die beiden Gehäuseelemente 8, 12 mit der vorherigen Vorspannkraft gegeneinander zieht.

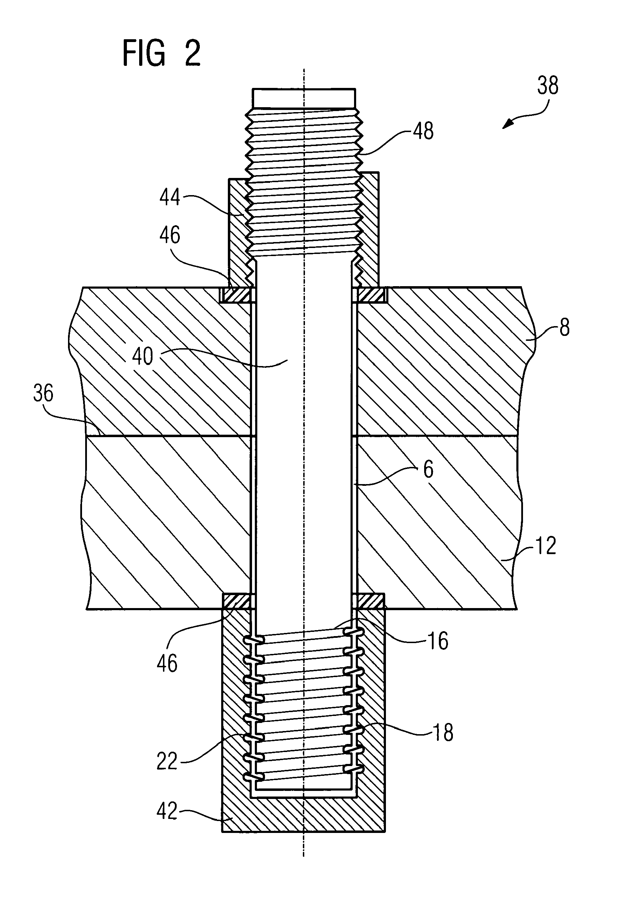

In FIG 2 ist ein weiterer Teilfugenverbinder 38 dargestellt, der jedoch durch einen von den beiden Gehäuseelementen 8, 12 gebildeten Flansch hindurchgeführt ist. Die nachfolgende Beschreibung beschränkt sich im Wesentlichen auf die Unterschiede zum Ausführungsbeispiel in FIG 1, auf das bezüglich gleichbleibender Merkmale und Funktionen verwiesen wird. Im Wesentlichen gleichbleibende Bauteile sind grundsätzlich mit den gleichen Bezugszeichen beziffert.

Durch eine durchgehende Öffnung 6 der Gehäuseelemente 8, 12 ist ein als Durchgangsbolzen ausgebildetes Spannelement 40 geführt, das ebenfalls als Spannbolzen ausgebildet ist und von einer ersten Hülse 42 und einer als Rohrmutter ausgeführten zweiten Hülse 44 an den Gehäuseelementen 8, 12 gehalten ist. Die erste Hülse 42 ist als Federmutter und die zweite Hülse 44 als Rohrmutter ausgeführt. In ein Sackloch der ersten Hülse 42 ist ein Innengewinde 18 eingebracht und das Spannelement 40 ist mit einem entsprechenden Außengewinde 16 versehen, so dass das Innengewinde 18 und das Außengewinde 16 einen spiralförmigen Kanal bilden, in dem eine als Spiraltellerfeder ausgeführte Vorspannfeder 22 angeordnet ist.

Zwischen der ersten Hülse 42 und dem Gehäuseelement 12 und zweite Hülse 44 und dem Gehäuseelement 8 ist jeweils eine Isolierscheibe 46 eingefügt, die aus einer Keramik besteht und die Hülse 42, 44 gegen das Gehäuseelement 8 bzw. das Gehäuseelement 12 etwas thermisch isoliert. Auf diese Weise kann die Temperatur im Teilfugenverbinder 38 herabgesetzt werden, um die bei hohen Temperaturen auftretende Relaxation zu mindern.

An seinem dem Außengewinde 16 entgegengesetzten Ende weist der Spannbolzen ein Schraubgewinde 48 auf, auf das die zweite Hülse 44 aufgeschraubt ist, wobei ein wesentlicher Teil des Schraubgewindes 48 außerhalb der Hülse 44 frei zugänglich bleibt. Zur schonenden Kraftübertragung ist zwischen die Hülse 44 und das Gehäuseelement 8 wiederum eine Isolierscheibe 46 eingefügt.

Zum Montieren und anschließenden Spannen des Spannelements 40 bzw. der beiden Gehäuseelemente 8, 12 gegeneinander wird die Vorspannfeder 22 in die erste Hülse 42 eingeschraubt und das Spannelement 40 in die Vorspannfeder 22 geschraubt. Dann wird das Spannelement 40 durch die Öffnung 6 gesteckt und mit der zweiten Hülse 44 verschraubt. Nun kann ein hydraulisches Spanngerät auf das vorstehende Ende des Schraubgewindes 48 geschraubt werden, das gegen das Gehäuseelement 8 abgestützt ist und das Spannelement 40 aus der Öffnung 6 zieht. Hierbei wird die Vorspannfeder 22 gespannt und die zweite Hülse 44 von dem Gehäuseelement 8 weg gezogen. Ist die gewünschte Vorspannung erreicht, kann die Hülse 44 fest auf die Isolierscheibe 46 und damit auf das Gehäuseelement 8 aufgeschraubt werden und das hydraulische Spanngerät kann entspannt werden. Die Vorspannfeder hält nun - analog wie zu FIG 1 beschrieben - das Spannelement 40 unter Vorspannung und die Gehäuseelemente 8, 12 an der Teilfuge 36 gegeneinander gepresst.

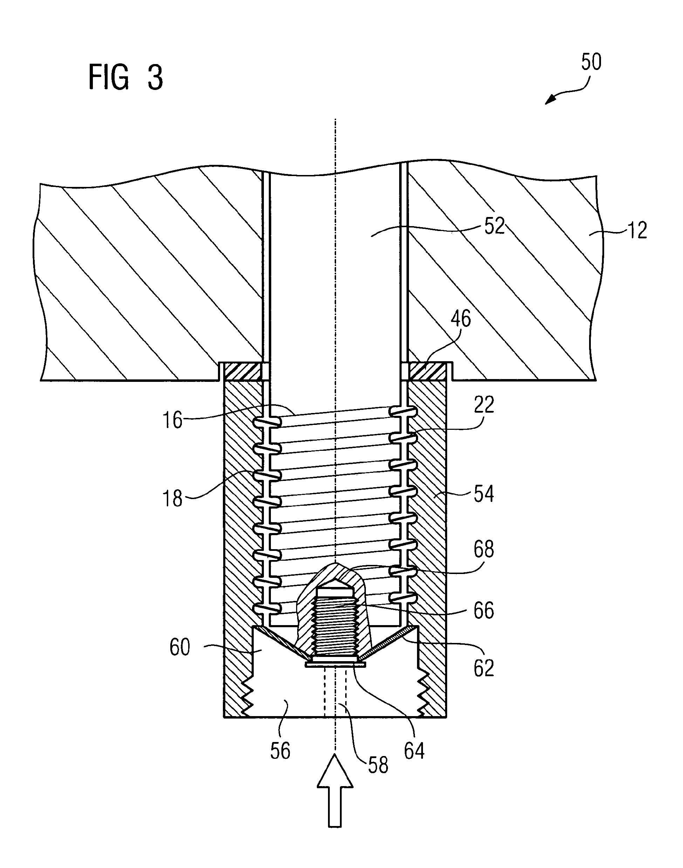

Ein weiterer Teilfugenverbinder 50 ist in FIG 3 ausschnittsweise dargestellt. Gezeigt ist nur ein Ende eines Spannelements 52, das an seinem anderen Ende ausgeführt sein kann wie in FIG 2 an der Hülse 44 dargestellt, wobei auf das vorstehende Teil des Schraubgewindes 48 verzichtet werden kann.

Im Gegensatz zur Hülse 42 weist der Teilfugenverbinder 50 eine Hülse 54 auf, deren Sackloch durch einen in die Hülse 54 eingeschraubten Deckel 56 gebildet wird. Im Deckel 56 ist ein Kanal 58 zum Anschluss für ein hydraulisches Spannmittel. Zwischen dem Deckel 56 und dem Spannelement 52 ist durch den Deckel 56 eine Druckkammer 60 zum hydraulischen Pressen der Vorspannfeder 22 gebildet. Zum Spannelement 52 hin ist diese Druckkammer 60 durch eine Tellerfeder 62 verschlossen, die durch einen Kragen 64 eines Haltezapfens 66 gehalten ist, der in eine Ausnehmung 68 des Spannelements 52 eingeschraubt ist.

Zum Vorspannen der Vorspannfeder 22 wird ein geeignetes hydraulisches Spannmittel an den Kanal 58 angeschlossen und Wasser mit einem Druck von beispielsweise 2000 bar in die Druckkammer 60 gedrückt. Hierdurch wird die Tellerfeder 62 gegen das Spannelement 52 und gegen die bis dahin entspannte Vorspannfeder 22 gedrückt, die nun gespannt wird. Ist eine ausreichende Vorspannung erreicht, kann, wie zu FIG 2 beschrieben, die Hülse 44 festgeschraubt werden, so dass die Vorspannfeder 22 in der vorgespannten Position verbleibt. Wie bei den anderen Ausführungsbeispielen auch, sind bei der Berechnung des Vorspannens Setzeffekte und eine Dehnung der entsprechenden Elemente, wie dem Spannelement 52, einbezogen, so dass die gewünschte Vorspannung nach einer Entlastung des entsprechenden Spannmittels erreicht wird.

### Bezugszeichenliste

- 2: Teilfugenverbinder
- 4: Spannelement
- 6: Öffnung
- 8: Gehäuseelement
- 10: Sackloch
- 12: Gehäuseelement
- 14: Innenelement
- 16: Außengewinde
- 18: Innengewinde
- 20: Mutter
- 22: Vorspannfeder
- 24: Druckfläche
- 26: Druckfläche
- 28: Deckel
- 30: Gewinde
- 34: Heizkanal
- 36: Teilfuge
- 38: Teilfugenverbinder
- 40: Spannelement
- 42: Hülse
- 44: Hülse
- 46: Isolierscheibe
- 48: Schraubgewinde
- 50: Teilfugenverbinder
- 52: Spannelement
- 54: Hülse
- 56: Deckel
- 58: Kanal
- 60: Druckkammer
- 62: Tellerfeder
- 64: Kragen
- 66: Haltezapfen
- 68: Ausnehmung

## Patentansprüche

1. Thermoelastischer Teilfugenverbinder (2, 38, 50) zum Verbinden zweier Gehäuseelemente (8, 12) einer Turbomaschine miteinander, umfassend ein Spannelement (4, 40, 52) zum Verbinden der Gehäuseelemente (8, 12) und zum Übertragen einer Vorspannkraft zum.Anpressen der Gehäuseelemente (8, 12) gegeneinander,
**gekennzeichnet durch** eine Vorspannfeder (22) zum federnden Aufbringen der Vorspannkraft.

2. Teilfugenverbinder (2, 38, 50) nach Anspruch 1,
**dadurch gekennzeichnet, dass** die Vorspannfeder (22) ein Tellerfederelement ist.

3. Teilfugenverbinder (2, 38, 50) nach Anspruch 1 oder 2,
**dadurch gekennzeichnet, dass** die Vorspannfeder (22) an mehreren in einer Axialrichtung des Spannelements (4, 40, 52) verteilten Stellen eines Kraftaufnahmemittels angreift.

4. Teilfugenverbinder (2, 38, 50) nach einem der vorhergehenden Ansprüche,
**dadurch gekennzeichnet, dass** die Vorspannfeder (22) eine Spiraltellerfeder ist.

5. Teilfugenverbinder (38, 50) nach einem der vorhergehenden Ansprüche,
**dadurch gekennzeichnet, dass** die Vorspannfeder (22) in ein Gewinde des Spannelements (40, 52) eingreift.

6. Teilfugenverbinder (2) nach einem der vorhergehenden Ansprüche,
**gekennzeichnet durch** eine die Vorspannung haltende Gewindeverbindung mit einem Außengewinde (16) eines Innenelements (14) und einem Innengewinde (18) einer Mutter (20), wobei die Vorspannfeder (22) zur Übertragung eines Kraftflusses vom Außengewinde (16) zum Innengewinde (18) in beide Gewinde eingreift.

7. Teilfugenverbinder (2) nach einem der vorhergehenden Ansprüche,
**dadurch gekennzeichnet, dass** die Vorspannfeder (22) in eine Mutter (20) zum Halten der Vorspannkraft eingreift.

8. Teilfugenverbinder (2) nach einem der vorhergehenden Ansprüche,
**gekennzeichnet durch** eine Mutter (20) zum Halten der Vorspannkraft und ein mit der Mutter (20) verschraubtes Innenelement (14) zum Übertragen der Vorspannkraft von der Mutter (20) auf das Spannelement (4), wobei die Vorspannfeder im Kraftfluss zwischen der Mutter (20) und dem Innenelement (14) angeordnet ist.

9. Teilfugenverbinder (38, 50) nach einem der vorhergehenden Ansprüche,
**gekennzeichnet durch** eine an einem Ende des Spannelements (40, 52) angeordnete erste Hülse (42, 54) und eine am anderen Ende des Spannelements (40, 52) angeordnete zweite Hülse (44), die beide im Kraftfluss der Vorspannkraft zwischen dem Spannelement (40, 52) und jeweils einem Gehäuseelement (8, 12) angeordnet sind, wobei die Vorspannfeder (22) in der ersten Hülse (42, 54) beherbergt ist.

10. Teilfugenverbinder (38, 50) nach Anspruch 9,
**dadurch gekennzeichnet, dass** die erste Hülse (42, 54) mit einem Sackloch zum Eingreifen des Spannelements (40, 52) versehen ist.

11. Teilfugenverbinder (50) nach Anspruch 9 oder 10,
**dadurch gekennzeichnet, dass** die erste Hülse (54) einen Anschluss für ein hydraulisches Spannmittel aufweist.

12. Teilfugenverbinder (50) nach Anspruch 11,
**dadurch gekennzeichnet, dass** die erste Hülse (54) eine Druckkammer (60) zum hydraulischen Pressen der Vorspannfeder (22) aufweist.
